# EUROPÄISCHE PATENTSCHRIFT

(11) **EP 2 892 964 B1**
(45) Veröffentlichungstag und Bekanntmachung des Hinweises auf die Patenterteilung: **21.03.2018**
(21) Anmeldenummer: 13771077.8
(22) Anmeldetag: 05.09.2013
(51) Int. Cl.: C09J 7/04, C09J 121/00, C09J 133/08, H01B 3/48, H01B 7/28

(54) **KLEBEBAND, INSBESONDERE WICKELBAND ZUR BÜNDELUNG VON KABELN IN AUTOMOBILEN**
ADHESIVE TAPE, MORE PARTICULARLY WRAPPING TAPE FOR BUNDLING CABLES IN CARS
RUBAN ADHÉSIF, NOTAMMENT RUBAN ENROULÉ SERVANT À FORMER DES FAISCEAUX DE CÂBLES DANS DES AUTOMOBILES

(30) Priorität: 10.09.2012 DE 202012103442 U; 01.10.2012 DE 202012103754 U
(43) Veröffentlichungstag der Anmeldung: 15.07.2015
(73) Patentinhaber: certoplast Technische Klebebänder GmbH, 42285 Wuppertal (DE); Rambusch, Peter, 42115 Wuppertal (DE)
(72) Erfinder: Rambusch, Peter, 42115 Wuppertal (DE)
(74) Vertreter: Nunnenkamp, Jörg
(86) Internationale Anmeldenummer: PCT/EP2013/068348
(87) Internationale Veröffentlichungsnummer: WO 2014/037431

(56) Entgegenhaltungen:
- EP-A1- 1 990 393
- EP-A1- 2 520 629
- EP-A2- 1 754 764
- DE-U1- 20 205 486

## Beschreibung

Die Erfindung betrifft ein Verfahren zur Herstellung eines Klebebandes, insbesondere eines Wickelbandes zur Bündelung von Kabeln in Automobilen, mit einem bandförmigen gewalzten Träger, und mit einer ein- oder beidseitig auf den Träger aufgebrachten Kleberbeschichtung, wobei der Träger als heiß kalandriertes Gewebe ausgebildet ist.

Ein Verfahren zur Herstellung eines Klebebandes des eingangs beschriebenen Aufbaus wird im Rahmen der EP 1 990 393 A1 beschrieben. Hier geht es um ein handeinreißbares Gewebeklebeband, dessen Träger auch durch eine Kalandrierung verfestigt werden kann. Hierdurch lässt sich die elektrische Mindestdurchschlagfestigkeit erhöhen.

Im Rahmen der EP 1 754 764 A2 geht es um ein Klebeband, dessen Gewebeschicht eine glattgeschliffene Oberfläche aufweist. Zu diesem Zweck durchläuft die Gewebeschicht nach ihrer Herstellung eine Fuge eines Kalanders zwischen einer beheizten harten Stahlwalze und einer weichen Gegenwalze. Die glatt zu schleifende Oberfläche der Gewebeschicht liegt dabei an der beheizten Stahlwalze an, welche mit deutlich höherer Umfangsgeschwindigkeit im Vergleich zu der weichen Gegenwalze läuft und so schleifend arbeitet und für den gewünschten Glattschliff sorgt.

Vergleichbares beschreibt das Gebrauchsmuster DE 202 05 486 U1. Hier wird ein Klebeband beschrieben, bei dem der Träger zumindest bereichsweise ein- und/oder beidseitig eine glatt geschliffene Oberfläche aufweist. Auch in diesem Fall wird das Trägermaterial zwischen zwei Kalanderwalzen hindurchgeführt.

Der Kalander setzt sich aus einer zumeist beheizten harten Stahlwalze und einer demgegenüber weichen Gegenwalze zusammen. Die beheizte Stahlwalze läuft mit einer höheren Umfangsgeschwindigkeit im Vergleich zu der weichen Gegenwalze, die letztlich für den Transport des bandförmigen Trägers durch den Kalander sorgt.

Die lediglich im Sinne von Art. 54 (3) EPÜ zu berücksichtigende EP 2 520 629 A1 betrifft ein Verfahren zur Herstellung eines Klebebandes zum Umwickeln von Kabeln. Das Klebeband greift auf einen textilen Träger mit einer darauf einseitig beschichteten Haftklebemasse bestimmter Scherviskosität zurück. Außerdem wird das Gewebe bei Temperaturen im Bereich von 80 °C bis 250 °C und unter hohem Druck kalandert. Dadurch tritt eine Verdichtung der Oberfläche ein. Die Luftdurchlässigkeit wird durch diese Maßnahme unter einen Wert von 200 l/m²s nach DIN EN ISO 9237 abgesenkt.

Darüber hinaus wird ein Klebeband in der DE 603 04 186 T2 vorgestellt. Hier geht es im Kern darum, mit einem kettengewirkten Substrat zu arbeiten, welches ein Schussgarn umfasst, das einen höheren Titer als das Wirkgarn aufweist. Auf das Substrat ist eine Kleberbeschichtung aufgebracht. Dabei ist das Substrat insgesamt geschlossen ausgelegt, um den Durchgang des Klebstoffs hierdurch im Wesentlichen zu verhindern. Zu diesem Zweck wird das Substrat u. a. durch Walzen geleitet, von denen zumindest eine erhitzt ist. Auf diese Weise wird wenigstens eine Seite des Substrates eingeebnet und wahlweise das Schmelzen oder Verschmelzen des Substrates unterstützt. Dadurch wird eine relativ flache geschlossene Oberfläche auf einer Seite des Substrates hergestellt.

Das bekannte Klebeband hat sich grundsätzlich bewährt, ist jedoch - was die mechanische Stabilität angeht - verbesserungsbedürftig. Denn solche kettengewirkten Substrate mit einem Schussgarn, welches einen höheren Titer als das Wirkgarn aufweist, sind kaum für die besonderen Belastungen beim Einsatz zur Bündelung von Kabeln in Automobilen geeignet. Zwar wird für solche kettengewirkten Substrate geltend gemacht, dass die Schussgarne im Wesentlichen parallel zueinander über das Band verlaufen, um das Reißen des Bandes zu führen. An der mangelnden mechanischen Stabilität, die für den zuvor beschriebenen automobilen Einsatz gefordert wird, ändert dies jedoch nichts.

Ein für automobile Anwendungen besonders geeignetes Klebeband wird in der EP 1 448 744 B1 vorgestellt. Hier ist ein als Gewebe oder Vlies ausgebildeter Träger realisiert, welcher zumindest bereichsweise ein oder beidseitig eine glatt geschliffene Oberfläche aufweist. Zu diesem Zweck kommen Kalanderwalzen zum Einsatz, die mit unterschiedlicher Drehzahl unter Darstellung einer Friktion der glatt zu schleifenden Oberfläche betrieben werden. Dadurch wird an dieser Stelle ein Hochglanz- oder Chintzeffekt i. V. m. einer quasi geschlossenen und dadurch schmutzabweisenden Oberfläche zur Verfügung gestellt. Diese Oberfläche ist gegenüber verschiedenen Medien wie Öl, Diesel, Benzin etc. mehr oder minder undurchlässig respektive schmutzabweisend ausgebildet. Auf diese Weise kann der Klebstoff problemlos auf den Träger aufgetragen werden und dringt in diesen nicht hinein bzw. durchdringt diesen nicht.

Der Vorgang des Glattschleifens bei der EP 1 448 744 B1 setzt voraus, dass die Walzen mit unterschiedlicher Umfangsgeschwindigkeit laufen. Tatsächlich wird meistens eine beheizte harte Stahlwalze gegenüber einer weichen Gegenwalze realisiert. Der hiermit verbundene anlagentechnische Aufwand ist insgesamt nicht zu vernachlässigen. Hier setzt die Erfindung ein.

Der Erfindung liegt das technische Problem zugrunde, ein derartiges Verfahren zur Verfügung zu stellen, welches mit reduzierten Kosten gegenüber bisherigen Ausgestaltungen arbeitet, gleichwohl die Anforderungen an den Einsatz im Automobilsektor erfüllt.

Zur Lösung dieser technischen Problemstellung ist Gegenstand der Erfindung ein gattungsgemäßes Verfahren, welches dadurch gekennzeichnet ist, dass der Träger mit Hilfe einer Anordnung aus wenigstens zwei mehr oder minder identisch aufgebauten Walzen unterschiedlicher Temperatur im Kalander heiß kalandriert wird, wonach zumindest eine Walze erhitzt ist, um wenigstens eine Seite des Trägers einzuebnen, und wonach die Walzen den Träger mit gleicher Umfangsgeschwindigkeit durch den Walzenspalt hindurchführen, so dass die Luftdurchlässigkeit des Trägers um wenigstens 15 bis 25 % durch das Heißkalandrieren sinkt, d. h., das Gewebe als Träger verfügt ohne den zusätzlichen Schritt des Heißkalandrierens über eine Luftdurchlässigkeit, die 15 bis 25 % größer ist, als wenn der gleiche Träger heiß kalandriert wird.

Im Rahmen der Erfindung kommt also zunächst einmal ein Gewebe zum Einsatz, also im Unterschied zu der Lehre nach der DE 60 304 186 T2 gerade kein kettengewirktes Substrat. Das Gewebe kann handeinreißbar in Querrichtung ausgebildet sein. Typischerweise ist das Gewebe mit mehr als 20 Fäden/cm in Kettrichtung ausgerüstet. Eine vergleichbare Fädenanzahl kann auch in Schussrichtung Verwendung finden. Dabei wird man die Fäden in Kettrichtung bzw. die Kettfäden zur Erzielung der beschriebenen Handeinreißbarkeit typischerweise mit einer geringeren Feinheit als diejenigen in Schussrichtung, die Schussfäden auslegen. Tatsächlich wird sowohl in Kettrichtung als auch in Schussrichtung des Trägers bzw. des dort eingesetzten Gewebes meistens mit einer Garnfeinheit von 30 bis 180 denier vorzugsweise von ca. 150 denier der zugehörigen Fäden (Kettfäden bzw. Schussfäden) gearbeitet.

Dadurch wird eine besonders hohe mechanische Stabilität erreicht und zugleich die Möglichkeit geschaffen, den Träger in Querrichtung bzw. in Schussrichtung einreißen zu können. Grundsätzlich kann aber auch mit unterschiedlichen Feinheiten in Kett- und Schussrichtung gearbeitet werden. So ist es auch denkbar, dass die Fäden in Kettrichtung eine Garnfeinheit von 50 bis 70 denier aufweisen. Demgegenüber mögen die Fäden in Schussrichtung mit einer Garnfeinheit von ca. 130 denier ausgerüstet sein.

Als Materialien für die Filament- bzw. Fasergarne des Gewebes bzw. für die Kett- und Schussfäden empfiehlt die Erfindung typischerweise Kunststofffasern, insbesondere Polyester- oder Polypropylenfasern. Die Fasern können grundsätzlich gefärbt. d.h. spinndüsengefärbt respektive garngefärbt sein. Beispielsweise mögen die Fasern eine schwarze Färbung aufweisen. Außerdem ist die Auslegung regelmäßig so getroffen, dass der Träger eine Reißkraft bzw. Reißfestigkeit von typischerweise mehr als 60 N/cm aufweist. Ferner wird im Allgemeinen eine Reißdehnung von mehr als 10% beobachtet.

Auf diese Weise verfügt der Träger und mit ihm das erfindungsgemäße Klebeband über eine ausreichende mechanische Stabilität, um als Wickelband zur Bündelung von Kabeln in Automobilen vorteilhaft Verwendung finden zu können. Tatsächlich werden solche Wickelbänder typischerweise von Hand und in Querrichtung eingerissen und um zu bündelnde Kabel wendelförmig herumgewickelt. Auf diese Weise werden die Kabel zusammengefasst und auch vor mechanischen Einwirkungen geschützt. Außerdem ist das erfindungsgemäße Klebeband gegenüber verschiedenen Medien wie Öl, Diesel, Benzin etc. resistent.

Hierzu trägt besonders der Umstand bei, dass durch die erfindungsgemäße Heißkalandrierung des Trägers dessen Dichtigkeit bzw. die Dichtigkeit der Oberfläche signifikant gegenüber Ausführungsformen ohne vorgeschaltete Heißkalandrierung erheblich gesteigert werden konnte. Das gilt selbst für den Fall, dass der Träger nur teilweise heiß kalandriert ist. Im Allgemeinen wird der Träger jedoch vollflächig heiß kalandriert.

Jedenfalls sorgt die erfindungsgemäß vorgenommene Heißkalandrierung des Gewebes als Träger insgesamt dafür, dass die Dicke dieses Trägers gegenüber bisherigen Vorgehensweisen signifikant reduziert werden kann. Tatsächlich verfügt der Träger im Rahmen der Erfindung typischerweise über eine Dicke von 0,06 mm bis 0,8 mm, ist im Allgemeinen mit einer Dicke von weniger als 0,2 mm ausgerüstet. Bevorzugt kann sogar mit einer Dicke von weniger als 0,1 mm gearbeitet werden. Ganz besonders bevorzugt ist es, wenn der Träger bzw. Gewebeträger mit einer Dicke von lediglich 0,08 mm ausgerüstet ist.

Überraschenderweise hat sich nun im Rahmen der Erfindung herausgestellt, dass Träger und insbesondere Gewebeträger mit einer solchen geringen Dicke von typischerweise weniger als 0,1 mm dennoch direkt und ohne sogenannten Klebstoffdurchschlag beschichtet werden können. D.h., durch die vorgenommene Heißkalandrierung wird der Träger bzw. Gewebeträger so weit verdichtet, dass der anschließend aufgebrachte Klebstoff bzw. die aufgetragene Klebstoffbeschichtung nicht durch den Träger hindurch wandert bzw. beim Auftrag durch den Träger migriert. In diesem Zusammenhang können alle gängigen Beschichtungsmethoden für den Klebstoffauftrag eingesetzt werden, beispielsweise die Beschichtung im Hotmelt-Verfahren, durch Aufrakeln, Aufsprühen, Aufrollen etc.

Auf diese Weise lässt sich das erfindungsgemäße Klebeband mit einem sehr geringen Flächengewicht gegenüber sonst üblichen Gewebeträgern darstellen. Das ist für den Einbau bzw. den Einsatz des erfindungsgemäßen Klebebandes als Wickelband zur Bündelung von Kabeln in Automobilen von besonderer Bedeutung, weil hier die Gewichtsreduzierung ein wesentliches Entwicklungsziel darstellt. Außerdem führt der geringe Materialeinsatz erfindungsgemäß zur Kostenreduktion. Gleichzeitig eröffnet der als heiß kalandriertes Gewebe ausgebildete Träger bei größerer Dicke (als beispielsweise 0,2 mm) die Möglichkeit, die Luftdurchlässigkeit signifikant zu verringern. Außerdem wird die Durchschlagfestigkeit gegenüber Klebstoff erhöht, so dass im Vergleich zu Klebebändern gleicher Dicke ein hochwertigeres Produkt beobachtet wird.

Das heiß kalandrierte Gewebe für den Träger hat nicht nur den Effekt, dass der Träger wie beschrieben verdichtet wird, sondern durch die Heißkalandrierung können auch die Biegesteifigkeiten der Oberflächen des Trägers positiv beeinflusst werden. Tatsächlich wird durch die Heißkalandrierung der Träger auf zumindest einer Seite eingeebnet, nämlich auf seiner an der erhitzten Walze anliegenden Seite. Diese Seite des Trägers wird durch den beschriebenen Prozess der Heißkalandrierung mehr oder minder dicht geschlossen. Handelt es sich hierbei um die Oberseite des Trägers und wird in diesem Kontext nur die Unterseite mit einem Kleber beschichtet, so resultiert hieraus ein Klebeband, bei welchem die Bandenden nicht abstehen oder abstehen können bzw. sich um die zu bündelnden Kabel herumlegen.

Außerdem beobachtet man typischerweise eine höhere Klebkraft auf der kalandrierten Bandseite, d. h. auf der durch den Prozess der Heißkalandrierung mehr oder minder dicht geschlossenen Seite des Trägers. Diese höhere Klebkraft wird beispielsweise beobachtet, wenn das erfindungsgemäße Klebeband unter anderem zu einer Klebebandrolle aufgewickelt wird oder auch dann, wenn mit Hilfe des Klebebandes als Wickelband Kabel gebündelt werden. Tatsächlich stellt sich eine höhere Klebkraft der Kleberbeschichtung auf dieser kalandrierten Bandseite in den beschriebenen Situationen im Vergleich dazu ein, dass die Kleberbeschichtung auf einer nicht kalandrierten Bandseite haftet.

Diese höhere Klebkraft lässt sich darauf zurückführen, dass die kalandrierte Bandseite im Vergleich zu einer nicht kalandrierten Bandseite insgesamt glatter ausgebildet ist, so dass man zunächst einmal eine geringere Klebkraft erwarten würde. Dieser Effekt wird allerdings dadurch überkompensiert, dass die kalandrierte Bandseite insgesamt geschlossener als eine nicht kalandrierte Bandseite ausgelegt ist, so dass der Klebstoff der Kleberbeschichtung nicht (mehr) so stark in die praktisch nicht vorhandenen Öffnungen im Vergleich zur Situation einer nicht kalandrierten Bandseite eindringen kann.

Jedenfalls können die Eigenschaften des Klebebandes durch die Beaufschlagung einer oder beider Seiten mit der erhitzten Walze ebenso beeinflusst werden wie dadurch, dass die Beschichtung mit dem Kleber ein- oder beidseitig erfolgt. Werden beide Seiten des Trägers an jeweils einer erhitzten Walze vorbeigeführt, so verfügt der Träger über eine besonders hohe Biegesteifigkeit. Wird dagegen der Träger nur an einer Seite mit der erhitzten Walze behandelt, so ist eine höhere Klebkraft des Klebebandes im Vergleich zur Situation ohne Kalandrierung zu erwarten. Auf diese Weise lässt sich das Klebeband durch die jeweilige Prozessführung an die tatsächlichen Anforderungen zielgenau anpassen.

Zugleich stellt der Rückgriff auf die zuvor beschriebenen Kunststofffasern, insbesondere Polypropylen- oder Polyethylen- bzw. Polyesterfasern sicher, dass das erfindungsgemäße Klebeband temperaturstabil ausgebildet ist und insbesondere die beispielsweise im Motorraum bei der Bündelung von Kabeln herrschenden Temperaturen von bis zu 100°C unschwer aufnehmen kann. Grundsätzlich lassen sich sogar 150°C Dauertemperatur und darüber hinaus beherrschen.

Um die beschriebene Heißkalandrierung des Trägers im Detail zu realisieren, wird der Träger im Allgemeinen mit Hilfe einer Anordnung aus wenigstens zwei Walzen heiß kalandriert. In diesem Zusammenhang ist zumindest eine Walze erhitzt, um wenigstens eine Seite des Trägers einzuebnen. Meistens stehen sich eine kalte Walze (mit einer der Umgebungstemperatur entsprechenden Temperatur) und eine auf 100°C bis 350°C und insbesondere 150°C bis 250°C erhitzte Walze im Kalander unter Bildung eines Walzenspaltes für den hindurchzuführenden Träger gegenüber. Regelmäßig verfügt die erhitzte Walze über eine Temperatur von 150°C bis 250°C. Grundsätzlich können natürlich auch mehr als zwei Walzen zum Einsatz kommen.

Um den vorrichtungs- und verfahrensmäßigen Aufwand zu reduzieren und die hiermit verbundenen Herstellungskosten, reicht es jedoch aus, typischerweise zwei sich gegenüberliegende Walzen einzusetzen. Diese Walzen definieren zwischen sich den Walzenspalt, innerhalb dessen typischerweise ein Druck von ca. 2kp/cm² entsprechend ca. 0,2 MPa zur Beaufschlagung des Trägers herrscht. Tatsächlich werden die beiden Walzen so gegenüberliegend zueinander angeordnet, dass an dieser Stelle ein Druck im Walzenspalt von bis zu 10MPA herrscht. Im Allgemeinen wird ein Druck im Walzenspalt von ca. 0,1 bis 0,3 MPa beobachtet. Außerdem geht die Erfindung regelmäßig so vor, dass der Träger mit einer Geschwindigkeit von 10 bis 400 m/Min. und insbesondere von 20m/Min. bis 50 m/Min. und vorzugsweise mit einer Geschwindigkeit von ca. 40 m/Min. den Walzenspalt passiert. Dadurch wird eine hohe Verarbeitungsgeschwindigkeit zur Verfügung gestellt. Außerdem sorgt die angegebene Verarbeitungsgeschwindigkeit dafür, dass der Träger durch den beschriebenen Vorgang der Heißkalandrierung in dem beschriebenen Sinne modifiziert wird.

Hierzu trägt ergänzend der Umstand bei, dass die Kleberbeschichtung im Regelfall als Schmelzklebstoff auf vorzugsweise Acrylat- oder Kautschukbasis aufgetragen wird. Ein solcher Schmelzklebstoff kann problemlos bei derartigen Geschwindigkeiten des Trägers aufgebracht werden, und zwar im Anschluss an die beiden Walzen des Heißkalanders. Dabei wird man meistens so vorgehen, dass die Kleberbeschichtung auf die eine eingeebneten Seite des Trägers gegenüberliegende Seite voll- oder teilflächig aufgebracht wird. Grundsätzlich kann der Kleberauftrag aber auch unabhängig von der Heißkalandrierung nicht in dem beschriebenen einstufigen Prozess, sondern im Rahmen einer zweistufigen Vorgehensweise aufgebracht werden. In diesem Fall wird zunächst der Träger wie beschrieben hergestellt und erst im Anschluss in einem zweiten separaten Schritt die Kleberbeschichtung aufgetragen.

Die zuvor angesprochene eingeebnete Seite des Trägers wird an der Seite des Trägers beobachtet, an welcher die erhitzte Walze beim Heißkalandrieren vorbeigeführt wird. Denn die auf die angesprochenen Werte von 150°C bis 250°C und vorzugsweise ca. 200°C erhitzte Walze im Kalander sorgt an ihrer Oberfläche dafür, dass diese Seite des Trägers eingeebnet wird bzw. die an der heißen Walze anliegende Seite hinsichtlich der Oberflächeneigenschaften des Trägers an dieser Stelle eine Verbesserung erfährt. Tatsächlich sorgt die heiße Walze in diesem Zusammenhang dafür, dass die Oberfläche geglättet wird, die einzelnen Kunststofffasern gegeneinander eine Heißfixierung erfahren und etwaige überstehende Flottenreste verdampft werden. Dadurch wird zumindest eine Seite des Trägers mit einer geschlossenen bzw. nahezu geschlossenen Oberfläche ausgerüstet, die derjenigen entspricht bzw. hinsichtlich der Dichtigkeit überschreitet, wie sie durch das Chintzen nach der EP 1 448 744 B1 zur Verfügung gestellt wird.

Tatsächlich werden an dieser Stelle nämlich Luftdurchlässigkeiten beobachtet, die durch das Heißkalandrieren um wenigstens 15 bis 25 % sinken. Das heißt, ein Gewebe als Träger ohne einen zusätzlichen Schritt des Heißkalandrierens verfügt über eine Luftdurchlässigkeit, die 15 bis 25 % größer ist, als wenn der gleiche Träger erfindungsgemäß heißkalandriert wird. Im Detail werden beispielsweise Luftdurchlässigkeiten eines solchen Trägers aus einem Gewebe von ca. 70 bis 80l/m²s beobachtet, die durch eine zusätzliche Heißkalandrierung auf Werte von ca. 60 l/m²s verringert werden können.

Die Klebkraft auf Stahl liegt bei mehr als 1,5 N/cm. Diese Klebkraft wird in Anlehnung an DIN EN 1939 im Rahmen einer 180° Prüfung erfasst. Vergleichbare Klebkräfte werden auf Bandrücken beobachtet, und zwar gemäß dem Verfahren 2 und in Anlehnung an die bereits angesprochene DIN EN 1939 unter Berücksichtigung einer 180° Prüfung. Ergänzend wird Bezug genommen auf die Prüfnorm "Schutzsysteme für Leitungssätze in Kraftfahrzeugen LV 312-1" in der Ausgabe vom Oktober 2009.

Im Ergebnis wird ein Klebeband zur Verfügung gestellt, welches sich besonders einfach und kostengünstig herstellen lässt. Hierfür zeichnet primär die sogenannte Heißkalandrierung des Trägers verantwortlich, die im Gegensatz zum glattschleifenden Prozess nach der EP 1 448 744 B1 mit geringerem Aufwand und folglich kostengünstiger durchgeführt werden kann. Tatsächlich sind nämlich an dieser Stelle lediglich zwei mehr oder minder identisch aufgebaute Walzen im Kalander mit unterschiedlicher Temperatur erforderlich, die darüber hinaus auch noch mit gleicher Umfangsgeschwindigkeit den Träger durch den Walzenspalt hindurchführen.

Dadurch, dass die Kleberbeschichtung typischerweise auf der der geschlossenen Seite gegenüberliegenden Seite des Trägers aufgebracht wird, besteht die Möglichkeit, das Klebeband und insbesondere Wickelband in der Weise um zusammenzufassende Kabelbündel wendelförmig zu wickeln, dass die jeweils geschlossene Oberfläche nach außen weist. Diese geschlossene Oberfläche des Klebebandes bzw. des Wickelbandes sorgt dafür, dass etwaige im Automobil oder im Motorraum vorhandene Medien wie Öl, Wasser, Benzin etc. praktisch nicht in die geschlossene Oberfläche eindringen können. Dadurch wird die den Kabeln zugewandte Klebebeschichtung von derartigen Medien nicht erreicht und werden vergleichbare Eigenschaften des erfindungsgemäßen Klebebandes beobachtet, wie sie vorher nur mit einer Lackierung als Beschichtung realisiert werden konnten. Hierin sind die wesentlichen Vorteile zu sehen.

## Patentansprüche

1. Verfahren zur Herstellung eines Klebebandes, insbesondere eines Wickelbandes zur Bündelung von Kabeln in Automobilen, mit einem bandförmigen gewalzten Träger, und mit einer ein- oder beidseitig auf den Träger aufgebrachten Kleberbeschichtung, wobei der Träger als heiß kalandriertes Gewebe ausgebildet ist, **dadurch gekennzeichnet, dass**
- der Träger mit Hilfe einer Anordnung aus wenigstens zwei mehr oder minder identisch aufgebauten Walzen unterschiedlicher Temperatur im Kalander heiß kalandriert wird, wonach
- zumindest eine Walze erhitzt ist, um wenigstens eine Seite des Trägers einzuebnen, und wonach
- die Walzen den Träger mit gleicher Umfangsgeschwindigkeit durch den Walzenspalt hindurchführen, so dass
- die Luftdurchlässigkeit des Trägers um wenigstens 15 bis 25 % durch das Heißkalandrieren sinkt, d. h., das Gewebe als Träger verfügt ohne den zusätzlichen Schritt des Heißkalandrierens über eine Luftdurchlässigkeit, die 15 bis 25 % größer ist, als wenn der gleiche Träger heiß kalandriert wird.

2. Verfahren nach Anspruch 1, **dadurch gekennzeichnet, dass** sich eine kalte Walze und eine auf 100°C bis 350°C und vorzugsweise 150°C bis 250°C erhitzte Walze im Kalander unter Bildung eines Walzenspaltes für den hindurchzuführenden Träger gegenüberliegen.

3. Verfahren nach Anspruch 2, **dadurch gekennzeichnet, dass** im Walzenspalt ein Druck von bis zu 10 MPa und insbesondere von 0,1 bis 0,3 MPa zur Beaufschlagung des Trägers herrscht.

4. Verfahren nach einem der Ansprüche 1 bis 3, **dadurch gekennzeichnet, dass** der Träger mit einer Geschwindigkeit von 10 m/Min. bis 400 m/Min. und insbesondere von 20 m/Min. bis 50 m/Min. den Walzenspalt passiert.

5. Verfahren nach einem der Ansprüche 1 bis 4, **dadurch gekennzeichnet, dass** der Träger eine Reißkraft bzw. Reißfestigkeit von mehr als 60 N/cm aufweist.

6. Verfahren nach einem der Ansprüche 1 bis 5, **dadurch gekennzeichnet, dass** der Träger eine Reißdehnung von mehr als 10% besitzt.

7. Verfahren nach einem der Ansprüche 1 bis 6, **dadurch gekennzeichnet, dass** der Träger ganz oder teilweise heiß kalandriert ist.

8. Verfahren nach einem der Ansprüche 1 bis 7, **dadurch gekennzeichnet, dass** die Kleberbeschichtung auf die der eingeebneten Seite des Trägers gegenüberliegende Seite voll- oder teilflächig aufgebracht ist.

9. Verfahren nach einem der Ansprüche 1 bis 8, **dadurch gekennzeichnet, dass** als Kleberbeschichtung ein Schmelzklebstoff auf vorzugsweise Acrylat- oder Kautschukbasis zum Einsatz kommt.

10. Verfahren nach einem der Ansprüche 1 bis 9, **dadurch gekennzeichnet, dass** der Träger eine Dicke von 0,06 mm bis 0,8 mm, insbesondere eine Dicke von weniger als 0,2 mm, vorzugsweise eine Dicke von weniger als 0,1 mm und ganz besonders bevorzugt eine Dicke von 0,08 mm aufweist.

## Claims

1. A method for producing an adhesive tape, in particular a winding tape for bundling cables in cars, having a tape-like, rolled carrier, and having an adhesive coating which is applied to one or both sides of the carrier, the carrier being in the form of a hot-calendered woven fabric, **characterised in that**
- the carrier is hot-calendered in the calender with the aid of an assembly of at least two rollers of more or less identical structure but different temperatures, according to which
- at least one roller is heated to smooth at least one side of the carrier, and according to which
- the rollers guide the carrier through the nip at the same circumferential speed, so that
- the air-permeability of the carrier is reduced by at least 15 to 25 % by the hot-calendering, i.e., the carrier in the form of the woven fabric without the additional step of hot-calendering has an air-permeability which is 15 to 25 % higher than if the same carrier is hot-calendered.

2. The method according to claim 1, **characterised in that** a cold roller and a roller heated to 100 °C to 350 °C, preferably 150 °C to 250 °C, are arranged opposite each other in the calender, forming a nip through which the carrier can be guided.

3. The method according to claim 2, **characterised in that** there is a pressure of up to 10 MPa, in particular 0.1 to 0.3 MPa, in the nip for application to the carrier.

4. The method according to any one of claims 1 to 3, **characterised in that** the carrier passes through the nip at a speed of 10 m/min to 400 m/min, in particular 20 m/min to 50 m/min.

5. The method according to any one of claims 1 to 4, **characterised in that** the carrier has a tear resistance or tear strength of more than 60 N/cm.

6. The method according to any one of claims 1 to 5, **characterised in that** the carrier has an elongation at break of more than 10 %.

7. The method according to any one of claims 1 to 6, **characterised in that** the carrier is hot-calendered fully or partially.

8. The method according to any one of claims 1 to 7, **characterised in that** the adhesive coating is applied to all or some of the area of the side opposite the smoothed side of the carrier.

9. The method according to any one of claims 1 to 8, **characterised in that** a hot-melt, preferably acrylate- or rubber-based adhesive is used as the adhesive coating.

10. The method according to any one of claims 1 to 9, **characterised in that** the carrier has a thickness of 0.06 mm to 0.8 mm, in particular a thickness of less than 0.2 mm, preferably a thickness of less than 0.1 mm, and particularly preferably a thickness of 0.08 mm.

## Revendications

1. Procédé destiné à fabriquer une bande adhésive, notamment une bande d'enroulement pour regrouper des câbles dans des automobiles, avec un support laminé en forme de bande et avec un revêtement d'agent adhésif appliqué sur une face ou sur les deux faces du support, le support étant conçu sous la forme d'un tissu thermocalandré, **caractérisé en ce que**
- on thermocalandre le support à l'aide d'une configuration de cylindres de conception plus ou moins identique à différentes températures dans la calandre, suite à quoi,
- on chauffe au moins un cylindre, pour aplanir au moins une face du support et suite à quoi,
- les cylindres guident le support à la même vitesse périphérique à travers la fente de calandrage, de telle sorte que
- la perméabilité à l'air du support baisse d'au moins 15 à 25 % du fait du thermocalandrage, c'est-à-dire que sans l'étape supplémentaire du thermocalandrage, le tissu en tant que support fait preuve d'une perméabilité à l'air qui est supérieure de 15 à 25 % à celle du support thermocalandré.

2. Procédé selon la revendication 1, **caractérisé en ce qu'**un cylindre froid et un cylindre chauffé à de 100 °C à 350 °C et de préférence à de 150 °C à 250 °C sont placés en vis-à-vis dans la calandre, en formant une fente de calandrage pour le support qui doit être guidé à travers.

3. Procédé selon la revendication 2, **caractérisé en ce que** dans la fente de calandrage règne une pression de jusqu'à 10 MPa et notamment de 0,1 à 0,3 MPa, pour y soumettre le support.

4. Procédé selon l'une quelconque des revendications 1 à 3, **caractérisé en ce que** le support passe à travers la fente de calandrage à une vitesse de 10 m/minute à 400 m/minute et notamment de 20 m/minute à 50 m/minute.

5. Procédé selon l'une quelconque des revendications 1 à 4, **caractérisé en ce que** le support fait preuve d'une force de rupture ou d'une résistance à la rupture de 60 N/cm.

6. Procédé selon l'une quelconque des revendications 1 à 5, **caractérisé en ce que** le support fait preuve d'une élongation à la rupture de plus de 10 %.

7. Procédé selon l'une quelconque des revendications 1 à 6, **caractérisé en ce que** le support est totalement ou partiellement thermocalandré.

8. Procédé selon l'une quelconque des revendications 1 à 7, **caractérisé en ce que** le revêtement d'agent adhésif est appliqué sur la pleine surface ou sur la surface partielle de la face opposée à la face aplanie du support.

9. Procédé selon l'une quelconque des revendications 1 à 8, **caractérisé en ce qu'**on utilise en tant que couche d'agent adhésif une colle thermofusible, de préférence sur base d'acrylate ou de caoutchouc.

10. Procédé selon l'une quelconque des revendications 1 à 9, **caractérisé en ce que** le support présente une épaisseur de 0,06 mm à 0,8 mm, notamment une épaisseur de moins de 0,2 mm, de préférence une épaisseur de moins de 0,1 mm et de manière particulièrement préférentielle, une épaisseur de 0,08 mm.
